# EUROPEAN PATENT APPLICATION

(11) **EP 4 361 685 A1**
(43) Date of publication of application: **01.05.2024**
(21) Application number: 23154068.3
(22) Date of filing: 30.01.2023
(51) Int. Cl.: G02B 3/14, G02B 26/00

(54) **AN OPTOMECHANICAL ASSEMBLY AND OPERATING PROCEDURE OF SAID ASSEMBLY**

(30) Priority: 25.10.2022 WO PCT/EP2022/079843; 14.12.2022 DE 102022133359; 15.01.2023 WO PCT/EP2023/050789
(71) Applicant: Nextlens Switzerland AG, 8953 Dietikon (CH)
(72) Inventor: The designation of the inventor has not yet been filed
(74) Representative: Schulz Junghans Patentanwälte PartGmbB

(57) **Abstract**

The present invention relates to an optomechanical assembly (8) comprising an image sensor (21), a shape changing focus adjustable lens (12) and a movable rigid lens (14), which in operation results in a reduced field curvature on the image sensor (21) by moving the movable rigid lens (14) and changing the shape changing focus adjustable lens (12).

## Description

The invention relates to an optomechanical assembly and to a method for operating such an assembly as well as to methods using such an assembly.

Optomechanical assemblies are used for example in digital cameras, which are included in mobile phones or smartphones. The requirements in the performance of such digital cameras increase in such a way that the optomechanical assemblies need further improvement in image quality.

Therefore, the problem to be solved by the present invention is to improve the image quality of an image generated by an optomechanical assembly.

This problem is solved by an optomechanical assembly having the features of claim 1. Further aspects of the present invention relate to methods having the features of claims 2, 3, and 25. Preferred embodiments of the optical assembly and the further aspects are stated in the dependent claims and are described below.

According to claim 1, an optomechanical assembly is disclosed, the optomechanical assembly comprising an image sensor, a shape changing focus adjustable lens and a movable rigid lens, wherein the shape changing focus adjustable lens and the movable rigid lens are arranged in series along a light path which extends through the shape changing focus adjustable lens and the movable rigid lens, wherein the movable rigid lens comprises a position with respect to the shape changing focus adjustable lens, wherein the shape changing focus adjustable lens and the movable rigid lens are configured to assume at least a first operational state and a different second operational state, wherein an optical power of the shape changing focus adjustable lens in the first operational state differs from an optical power of the shape changing focus adjustable lens in the second operational state, and wherein said position of the moveable rigid lens in the first operational state differs from a position of the moveable rigid lens in the second operational state, so as to achieve a reduced field curvature of the optomechanical assembly compared to only changing the shape of the shape changing focus adjustable lens or to only moving the movable rigid lens.

Particularly, the image sensor creates an image of an object. An object can be particularly understood as "anything that is being viewable". Furthermore, particularly, the shape changing focus adjustable lens is a focus lens, which changes its shape and thereby changes its optical power accordingly. Furthermore, particularly, the movable rigid lens is configured to move in exactly one, particularly in at least one, preferably in two degree(s) of freedom without changing its shape. Preferably, the movability of the movable rigid lens comprises a portion in a direction of the light path.

Furthermore, the image sensor can be at least a 1/4 inch sensor or at most a 2 inch sensor.

Preferably, the optomechanical assembly can be operated in such a way that there are at least two operational states possible, which does not explicitly exclude more than two operational states, in particular a plurality of operational states. Particularly, these operational states are preferably characterized in that there is a difference in the optical power of the shape changing focus adjustable lens and a difference in the position of the movable rigid lens in any two different operation states (e.g., in said first and second operational state). Both the optical power and said position changes when the system changes from one (e.g., the first) operation state to a different (e.g. second) operational state. Preferably, the optomechanical assembly is configured to conduct the change in optical power change and the change in position of the movable rigid lens in parallel. Particularly, according to an embodiment of the present invention, the optomechanical assembly is configured to conduct a switching from an operational state to a different operational state (e.g., from said first operational state to said second operational state) in two phases, i.e., a first phase and a second phase. In the first phase a coarse focus adjustment is conducted, wherein the first operational state switches to an intermediate state. In the second phase a fine focus adjustment is conducted, which is preferably done by adjusting the shape of the shape changing focus adjustable lens.

In the general case, a change of the optical power of the shape changing focus adjustable lens results in a field curvature on the image sensor if one considers an ideal flat object. The field curvature can be reduced and/or minimized by moving the movable rigid lens in a direction of the light path or against the direction of the light path, wherein the direction of the light path can be understood as the direction in which the incoming light travels along the light path towards the image sensor.

Conclusively, the field curvature is reduced in particular when imaging different sections of a scene, the first operational state and the second operational state are compared to only changing the shape of the shape changing focus adjustable lens.

Furthermore, in the general case, the movement of the movable rigid lens results in a field curvature on the image sensor if one considers an ideal flat object. The field curvature can be reduced and/or minimized by deforming the shape changing focus adjustable lens. Conclusively, the field curvature is reduced in particular when imaging different sections of a scene, the first operational state and the second operational state are compared to only moving the movable rigid lens.

In a preferred embodiment of the present invention, the optomechanical assembly can perform macro imaging. Particularly, in macro imaging, the image sensor is capable of taking a precise picture of an object that has a distance measured in the light path direction of less than 10cm between the object and the shape changing focus adjustable lens or the movable rigid lens. Preferably, the distance is less than 7cm, more preferably less than 5cm.

In a preferred embodiment of the present invention, the optomechanical assembly can perform an optical zoom procedure, which achieves on the image sensor a zoom ratio of more than 1.5 preferably more than 2.0, more preferably more than 2.5. In the optical zoom procedure, the shape changing focus adjustable lens is decreasing the optical power while the movable rigid lens is moving away from the image sensor. It is to be noted that the zoom ratio is to be distinguished from an optical zoom value. Regarding arrangement of the lenses of the optomechanical assembly, there are several positions possible with respect to the direction of the light path. According to a preferred embodiment, the shape changing focus adjustable lens is arranged in front of the movable rigid lens. According to yet another preferred embodiment, the movable rigid lens is arranged in front of the shape changing focus adjustable lens. In every configuration, the image sensor is the last element in the direction of the light path, wherein the image sensor converts the energy of the electromagnetic radiation into signals and processes an image in particular.

In a preferred embodiment, the optomechanical assembly comprises a second movable rigid lens and/or a third movable rigid lens. Particularly, the movable rigid lens, the second movable rigid lens and/or the third movable rigid lens have a fixed distance with respect to one another measured in the direction of the light path, which fixed distance(s) are particularly achieved by mounting these movable rigid lenses to a lens barrel.

In another preferred embodiment of the present invention, the optomechanical assembly comprises a non-movable rigid lens or a plurality of non-movable rigid lenses.

In another preferred embodiment of the present invention, the movable rigid lens is designed as a one-piece optical element or more preferably as a lens which can comprise a multitude of optical elements.

Furthermore, in a preferred embodiment of the present invention, the shape changing focus-adjustable lens can be designed as one of: an electrowetting lens, a liquid lens comprising a membrane, a glass membrane-polymer lens, a liquid crystal lens. Particularly, the shape changing focus-adjustable lens in form of the glass membrane-polymer lens comprises a polymer core and on one side of the shape changing focus adjustable lens a glass, wherein the shape changing focus-adjustable lens is configured to change a shape of the glass, particularly so as to adjust the optical power of the shape changing focus-adjustable lens.

In a preferred embodiment of the present invention, the movable rigid lens is capable of moving a distance of at least 0.3 mm. The movement can be generated by an actuator, preferably an electromagnetic actuator, which exerts a mechanical force onto a passive or active element attached to the movable rigid lens or to the barrel of the movable rigid lens, so that the position of the movable rigid lens can be controlled. Particularly, the maximum travel distance can be about 8 mm.

Furthermore, in a preferred embodiment of the present invention, the shape changing focus adjustable lens is configured to have an adjustment range of at least 3 diopters, preferably at least 5 diopters, more preferably at least 10 diopters. This can mean that a minimal diopter value which can be adjusted by the shape changing focus adjustable lens is at least 3 diopters, preferably at least 5 diopters and more preferably at least 10 diopters smaller than a maximal diopter value of the shape changing focus adjustable lens.

Further, in a preferred embodiment of the optomechanical assembly, the optomechanical assembly comprises a prism or a mirror, which changes the light path at least by 45 degrees and at most by 135 degrees with respect to a central light path component. Such an optomechanical assembly is considered as a folded optomechanical assembly.

Preferably, in an embodiment, the folded optomechanical assembly comprises an actuator which is configured to tilt the prism so that the tilting results in a surface change of the shape changing focus adjustable lens. The prism and the shape changing focus adjustable lens are preferably connected in such a way that a mechanical force is transferred from the prism to the shape changing focus adjustable lens directly. Preferably, there exists a connection area between the prism and the shape changing focus adjustable lens.

In an especially preferred embodiment, the shape changing focus adjustable lens is configured to compensate gravitational effects by using for example a second liquid of the shape changing focus adjustable lens in case of the membrane-based liquid lens.

In a further preferred embodiment of the present invention, the optomechanical assembly can be characterized by its optical quality. The polychromatic modular transfer function (MTF) value is larger than 0.15, preferably larger than 0.3, more preferably larger than 0.4, determined in each case at 125-line pairs per millimeter for visible light over at least 40% of the image sensor diagonal, preferably over at least 60% of the image sensor diagonal, more preferably over at least 80% of the image sensor diagonal, more preferably over at least 100% of the image sensor diagonal. The optomechanical assembly can be used for wide or tele applications.

In a further preferred embodiment, the optomechanical assembly can be characterized by its optical quality. The optical quality can be characterized by the field curvature resulting from imaging a flat object, which field curvature is less than the Rayleigh length of the focused light in the center of the image sensor over at least 40% of the image sensor diagonal, preferably over at least 60% of the image sensor diagonal, more preferably over at least 80% of the image sensor diagonal, more preferably over at least 100% of the image sensor diagonal.

In another preferred embodiment of the present invention, the optomechanical assembly comprises an image stabilization (OIS) mechanism, which for example allows the image sensor to move perpendicular to the light path. Alternatively, or in addition, OIS may be performed by moving the shape changing focus adjustable lens or the movable rigid lens perpendicular to the light path.

Particularly, this perpendicular movement is related to the time dependent motion of the optomechanical assembly and can be measured for example by a gyroscope. Alternatively, or in addition, a further possibility to achieve OIS is to tilt a prism in one, two or three degrees of freedom. Preferably, this or these degrees of freedom are one or two rotational degrees of freedom.

Every embodiment disclosed in the claims or in the specification of the application at hand can be combined with another one in any reasonable way.

Furthermore, a second aspect of the present invention relates to a method for operating an optomechanical assembly, preferably an optomechanical assembly according to the present invention. The operating procedure minimizes or reduces the field curvature of a picture on the image sensor. The operating procedure achieves such minimization or reduction by changing the optical power of the shape changing focus adjustable lens and moving the movable rigid lens. This operation procedure can be done in separate time intervals (move the movable rigid lens and keep the optical power of the shape changing focus adjustable lens constant and vice versa) or in parallel. Particularly, according to an embodiment, the portions resulting in a change of the field curvature are preferably 20 % to 80 % related to the shape changing focus adjustable lens or/and are preferably 20 % to 80 % related to the movable rigid lens.

In the following embodiments of the present invention as well as further features and advantages of the present invention are described with reference to the Figures, wherein
- Figure 1: shows a schematic diagram to describe the principal effect of the reduction of minimization of a field curvature.
- Figures 2a to 2d: show several different embodiments of an optomechanical assembly according to the present invention
- Figures 2e to 2g: show several different embodiments of an optomechanical assembly according to the present invention comprising a prism.
- Figure 3a to 3p: show ZMAX simulations of the optomechanical assembly, and
- Figure 4: shows a further embodiment of an optomechanical assembly according to the present invention, wherein the assembly comprises as movable rigid lens a lens group comprising a multitude of rigid lenses with fixed positions with respect to one another.

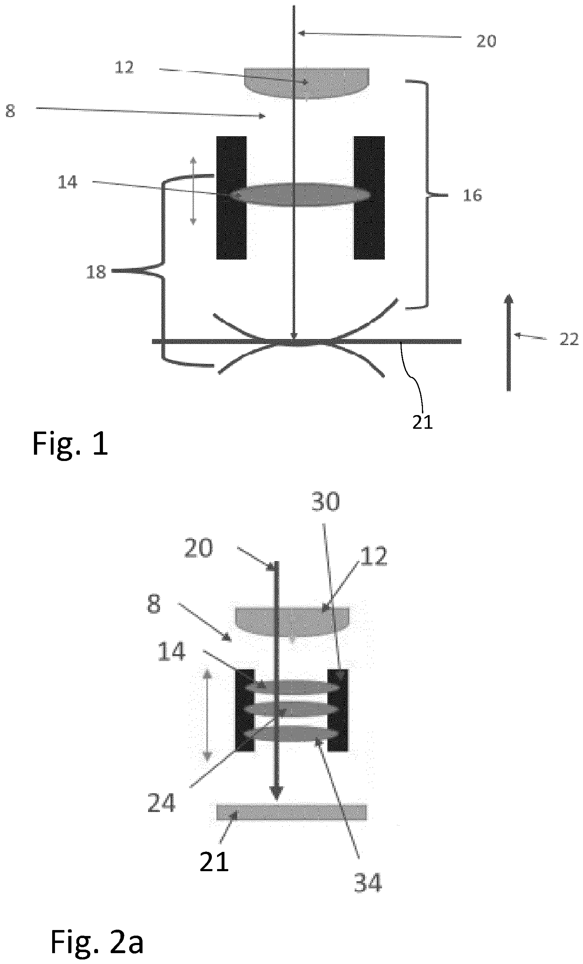

Figure 1 discloses an optomechanical assembly 8 comprising a shape changing focus adjustable lens 12 and a movable rigid lens 14. The shape changing focus adjustable lens 12 increases its optical power (indicated by an arrow) and induces a field positive field curvature after the light path 20 has passed the shape changing focus adjustable lens 12 and the movable rigid lens 14. Preferably, the field curvature 22 is measured on the image sensor 21. A relation between the increase of the optical power of the shape changing focus adjustable lens 12 is indicated by the brackets 16, 18. An increase of the optical power results in a "positive" field curvature 22. The movement of the movable rigid lens 14 in the direction of the light path 20 or against the direction of the light path 20 results in a "negative" field curvature 22 (cf. bracket 18). The combination of both adjustments results in a reduction or minimization of the field curvature 22 especially on the image sensor 21.

Figure 2a discloses an embodiment of the optomechanical assembly 8 having the shape changing focus adjustable lens 12 at the front with respect to the direction of the light path 20. The assembly 8 furthermore comprises a movable rigid lens 14, a second movable rigid lens 24, and a third movable rigid lens 34 arranged one after the other after the shape changing focus adjustable lens 12. The movable rigid lens 14, the second movable rigid lens 24, and the movable rigid lens 34 are integrated in a lens barrel 30 and therefore the three lenses 14, 24, 34 move together. The optomechanical assembly 8 further comprises an image sensor 21, which is arranged at the end of the light path 20 and creates an image of an object imaged with the optomechanical assembly 8.

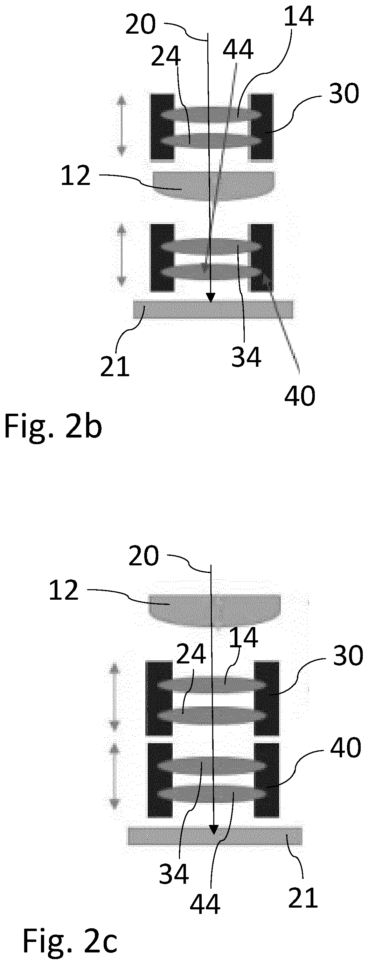

In the following, the elements shown in Figs. 2b to 2d are essentially the same as shown in Figure 2a.

Figure 2b discloses an optomechanical assembly 8 comprising four movable rigid lenses 14, 24, 34, 44, wherein the shape changing focus adjustable lens 12 is situated with respect to the light path 20 between the movable rigid lens 14 and the second movable rigid lens 24 and the third movable rigid lens 34 and the fourth movable rigid lens 44. The movable rigid lens 14 and the second movable rigid lens 24 are integrated in a lens barrel 30. The third movable rigid lens 34 and the fourth movable rigid lens 44 are integrated in a second lens barrel 44.

In contrast to Figure 2b, Figure 2c shows an embodiment of an optomechanical assembly 8 having a shape changing focus adjustable lens 12 in front of the two lens barrels 30 and 40 with respect to the light path 20.

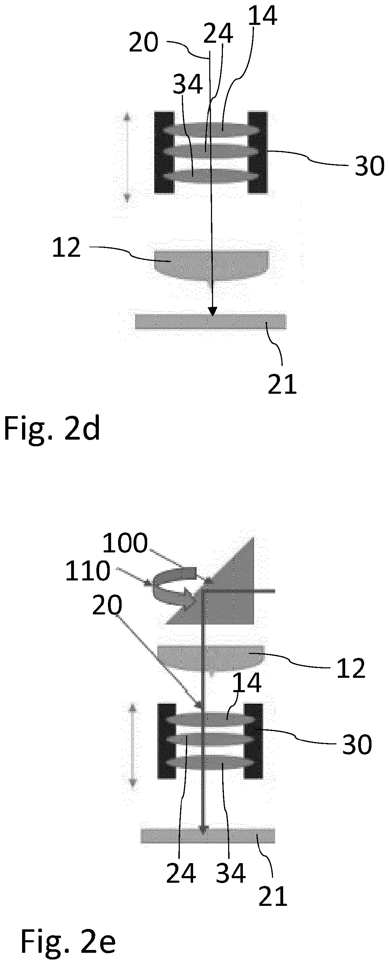

Figure 2d discloses the same embodiment as Figure 2a, but the order of the movable rigid lenses 14, 24, and 34 is changed with respect to the light path 20, wherein here the rigid lenses 14, 24, 34 are arranged in front of the shape changing focus adjustable lens 12.

Figure 2e shows a schematic illustration of a further embodiment of an optomechanical assembly 8 which comprises an arrangement of lenses as shown in Figure 2a with an additional rigid prism 100, which folds the light path 20 by round about 90 degrees or between 80 to 100 degrees. This prism 100 is tiltable in one degrees of freedom or two degrees of freedom 110 and is preferably arranged in front of the shape changing focus adjustable lens 12 in the direction of the light path 20.

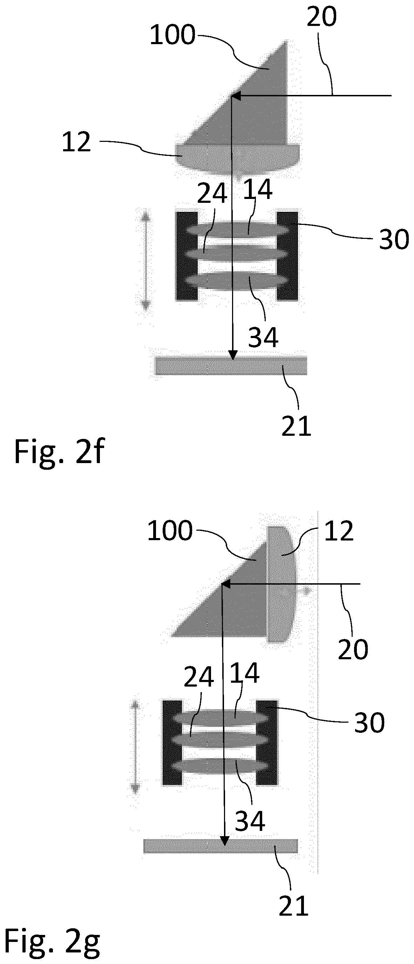

Figure 2f shows a schematic optomechanical assembly 8 in which the shape changing focus adjustable lens 12 is connected to the prism 100. A tilting motion of the prism results in a surface movement of the shape changing focus adjustable lens 12. According to Figure 2f the prism 100 can be arranged in front of the shape changing focus adjustable lens 12 in the direction of the light path 20, wherein the shape changing focus adjustable lens 12is arranged in front of the movable rigid lenses 14, 24, 34 in said direction.

Figure 2g shows the same optomechanical assembly 8 as Fig. 2f. The only difference is that the positions with respect to the light path 20 are reversed with respect to the shape changing focus adjustable lens 12 and the prism 100, i.e., here, with respect to the direction of the light path 20, the shape changing focus adjustable lens 12 is arranged in front of the prism 100 which is followed by the rigid lenses 14, 24, 34.

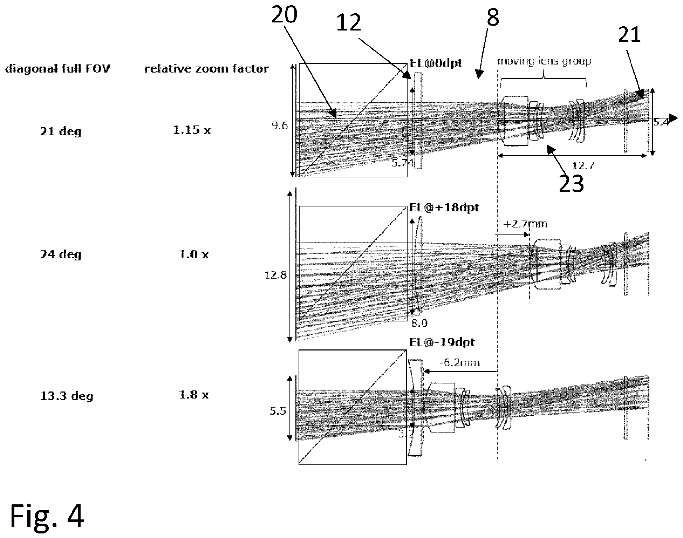

Figure 4 shows a further embodiment of an optical assembly 8 according to the present invention, wherein here, the assembly 8 comprises in the direction of the light path 20, a shape changing focus adjustable lens 12 in form of an electrowetting lens 12 followed by a multitude of rigid lenses that form a lens group 23, wherein the rigid lenses comprise fixed positions with respect to one another so that the lens group 23 moves as a whole, and a an image sensor 21 being arranged after the lens group 23. Figure 4 shows this embodiment for different values of diagonal full field of view (FOV) and relative zoom factor.

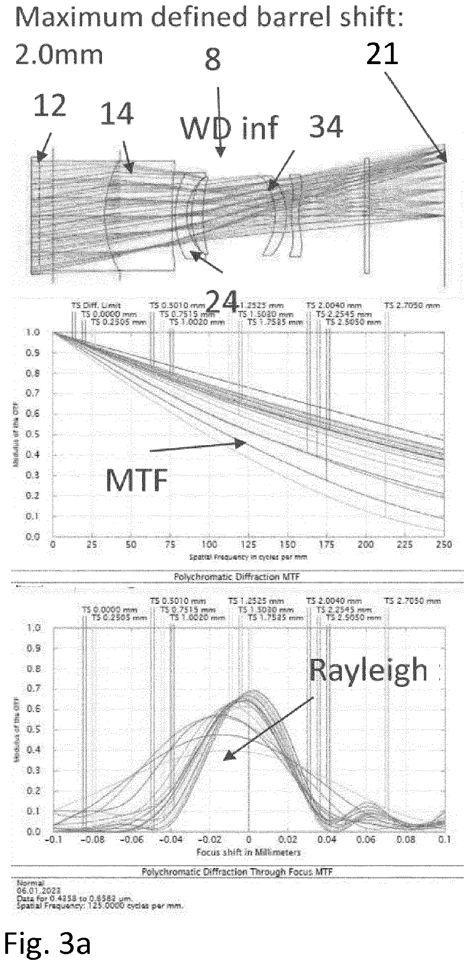

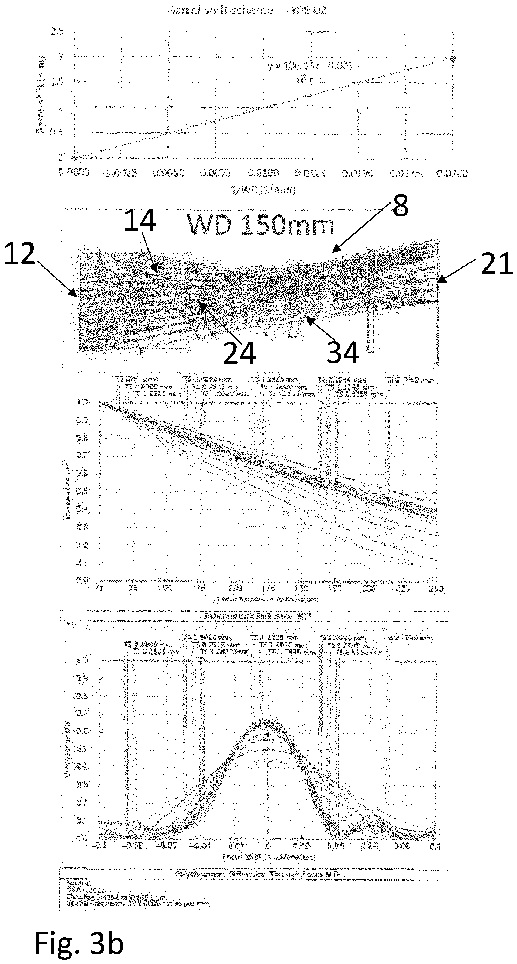

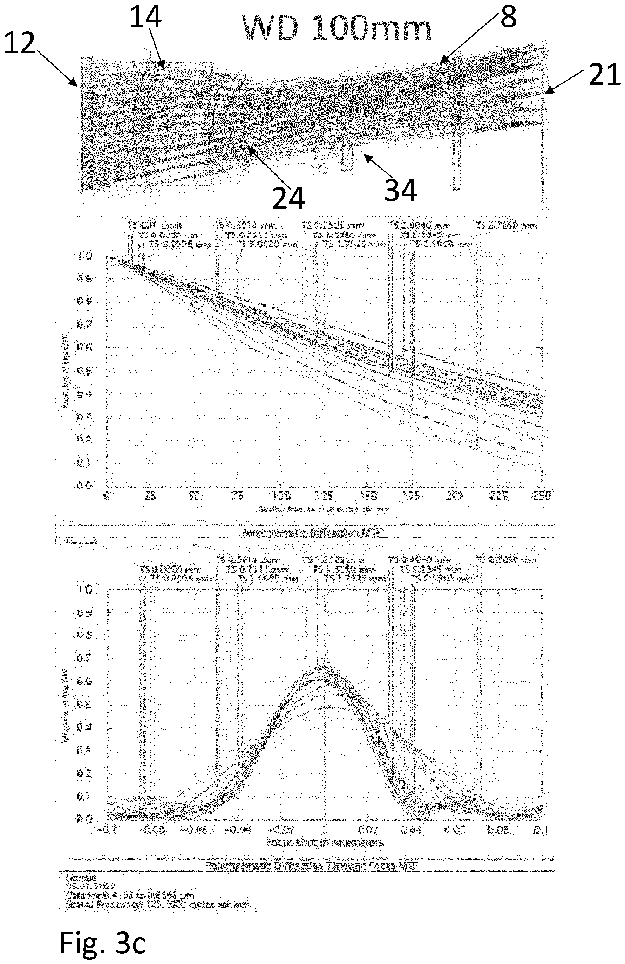

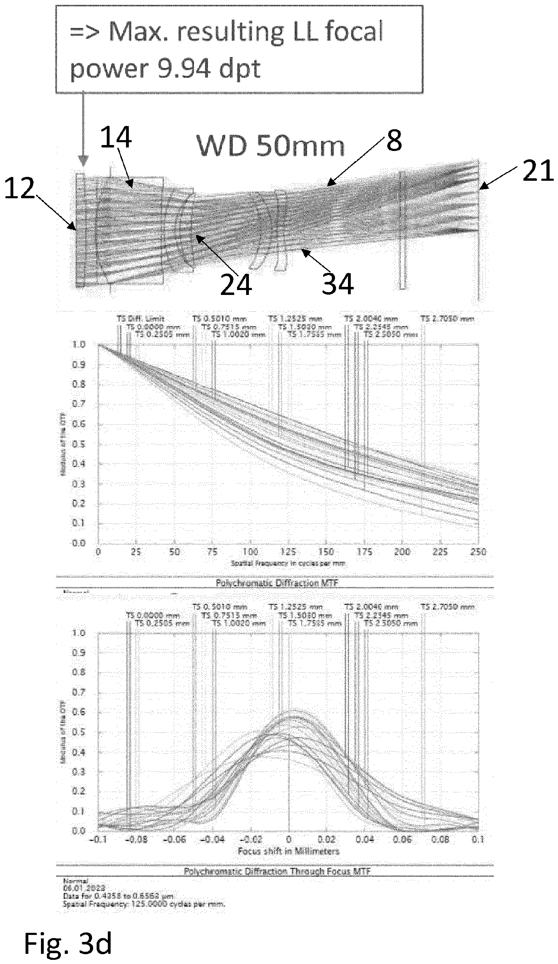

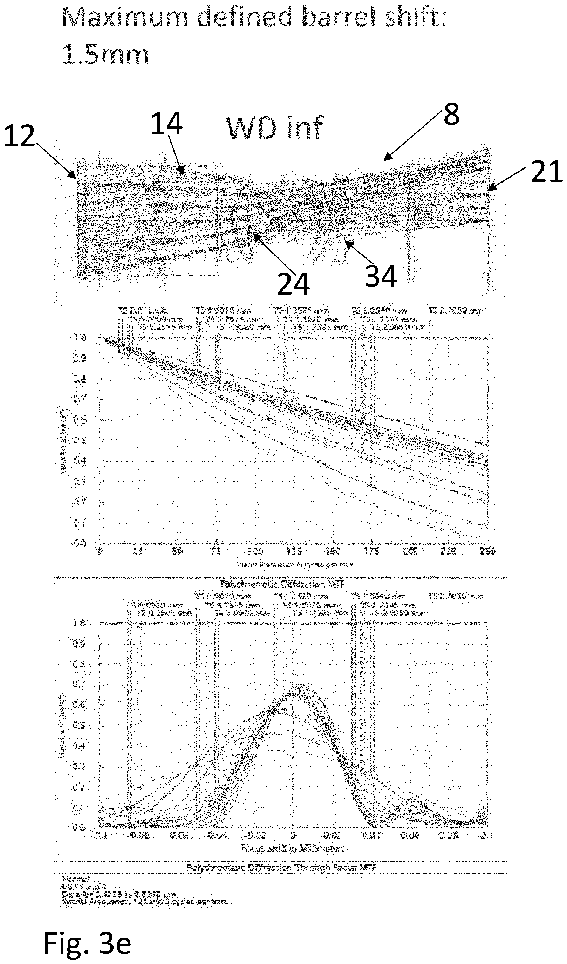

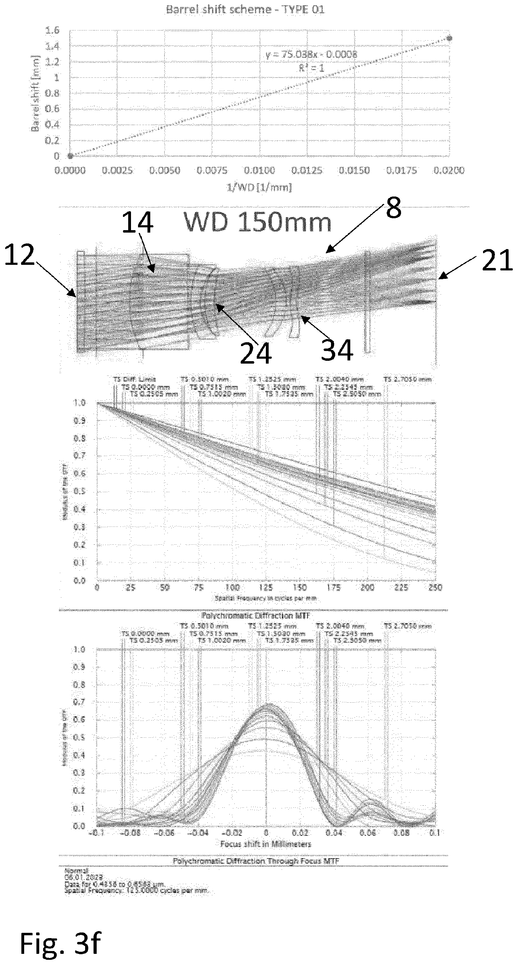

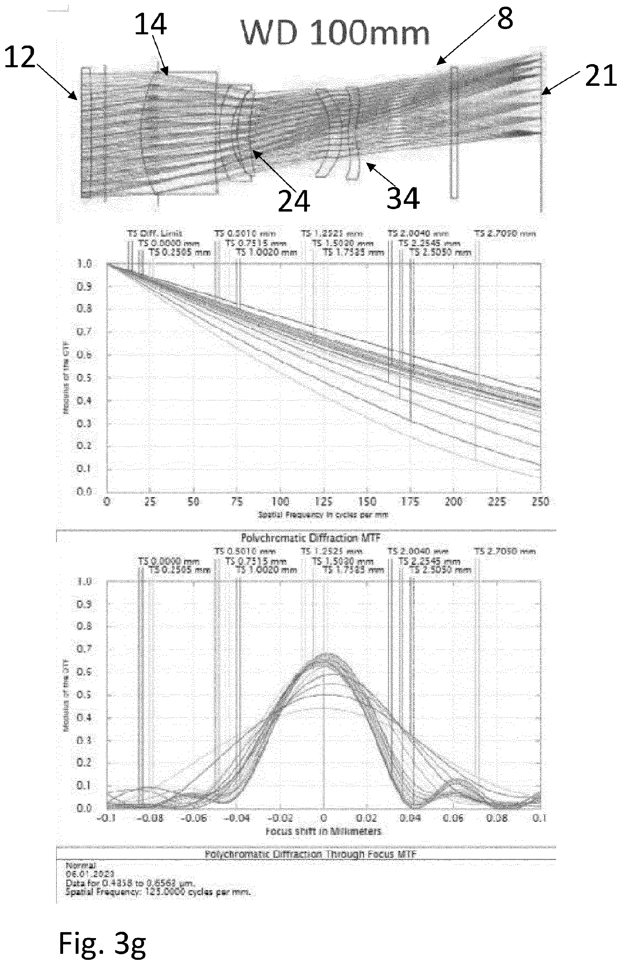

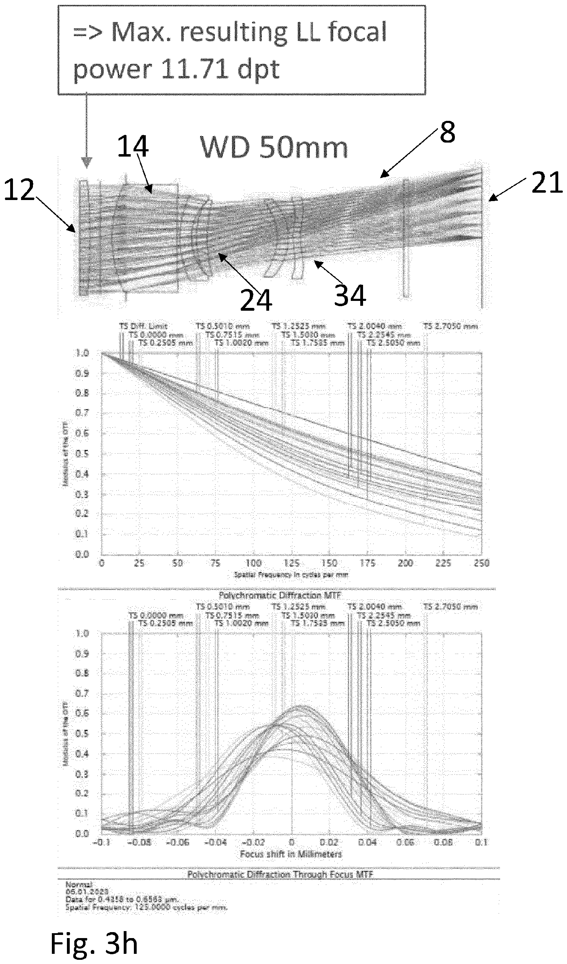

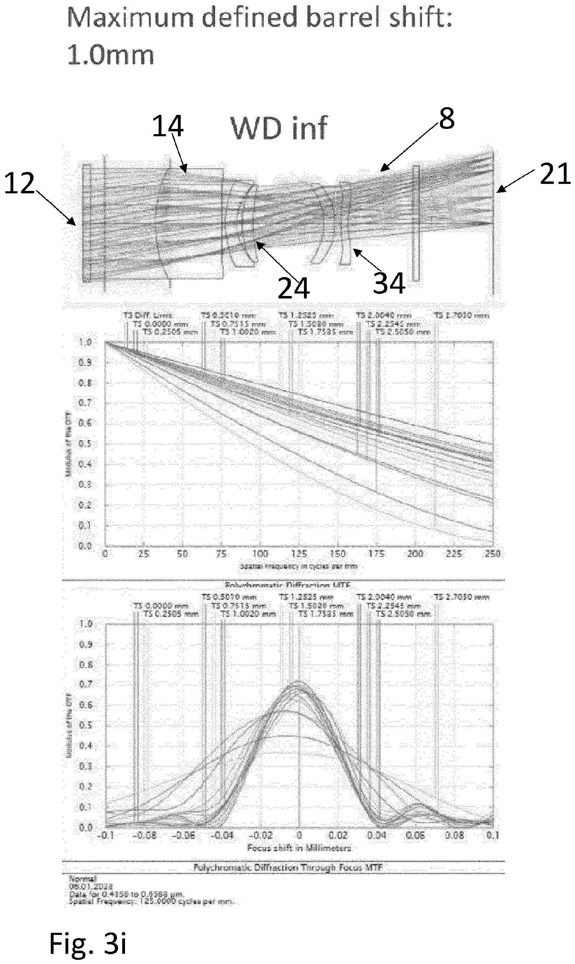

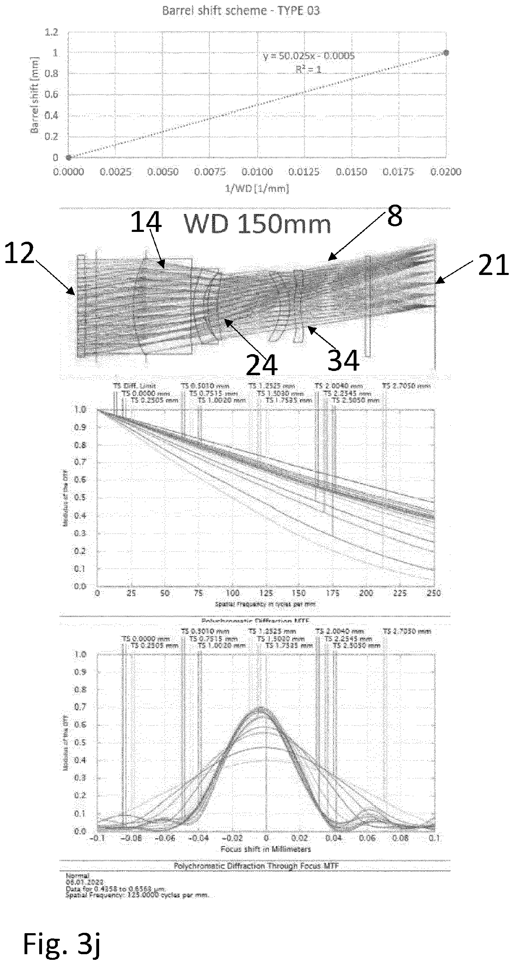

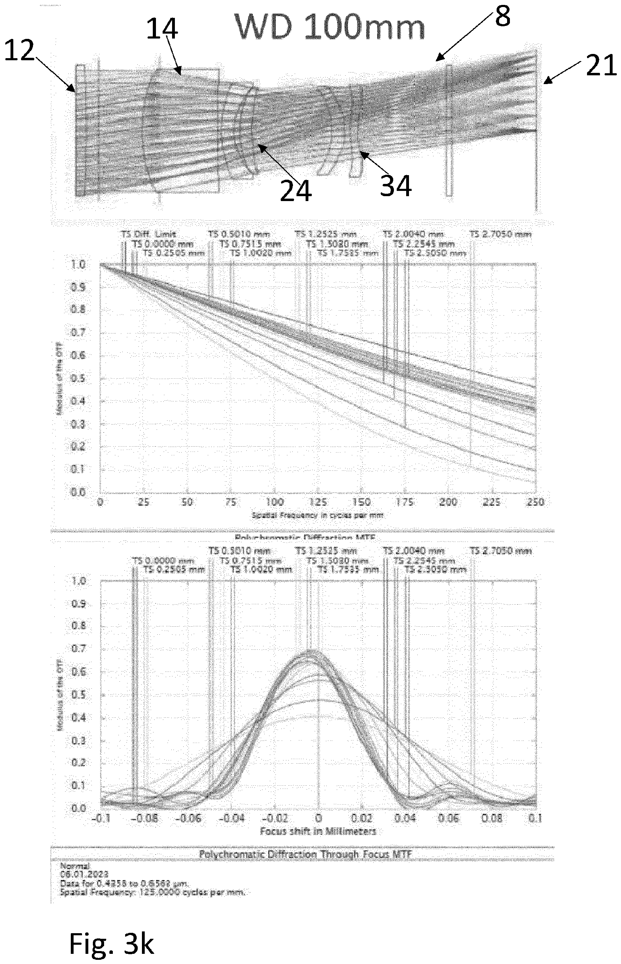

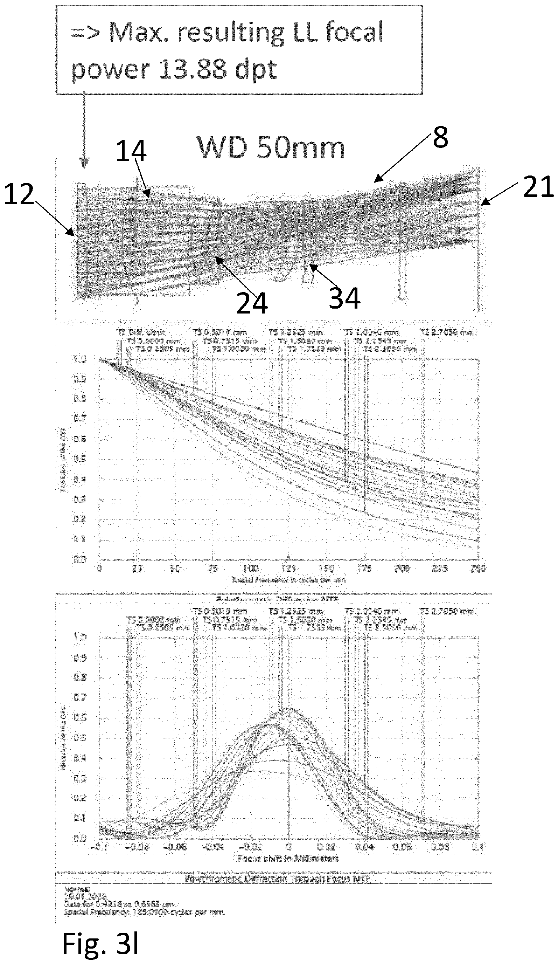

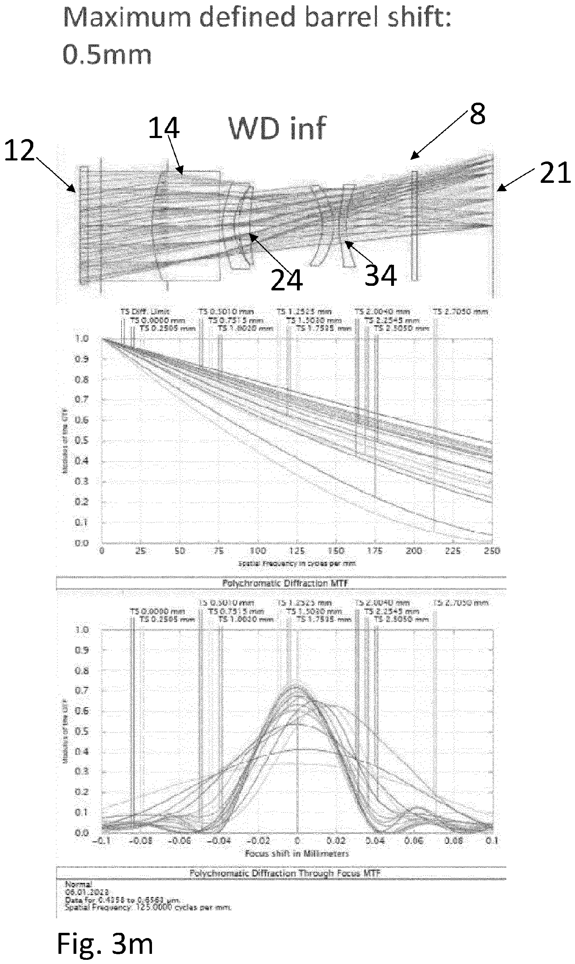

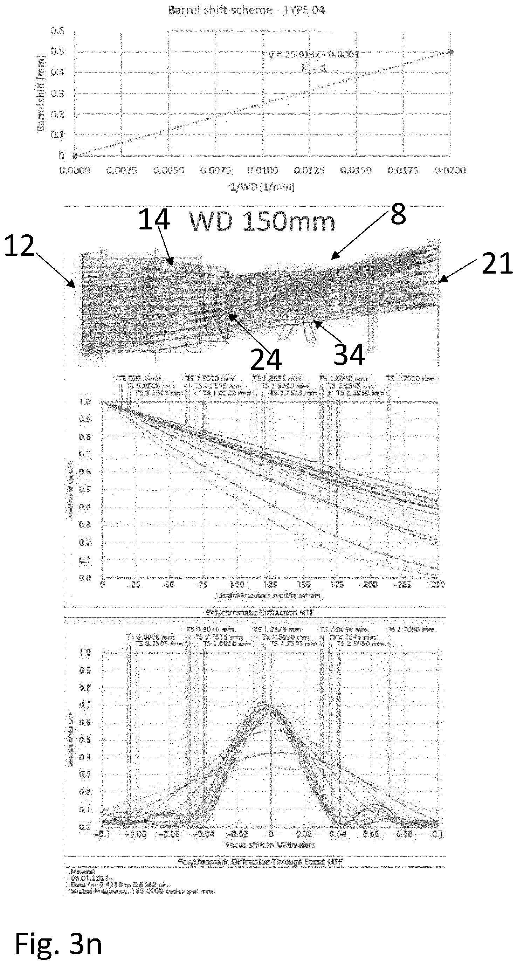

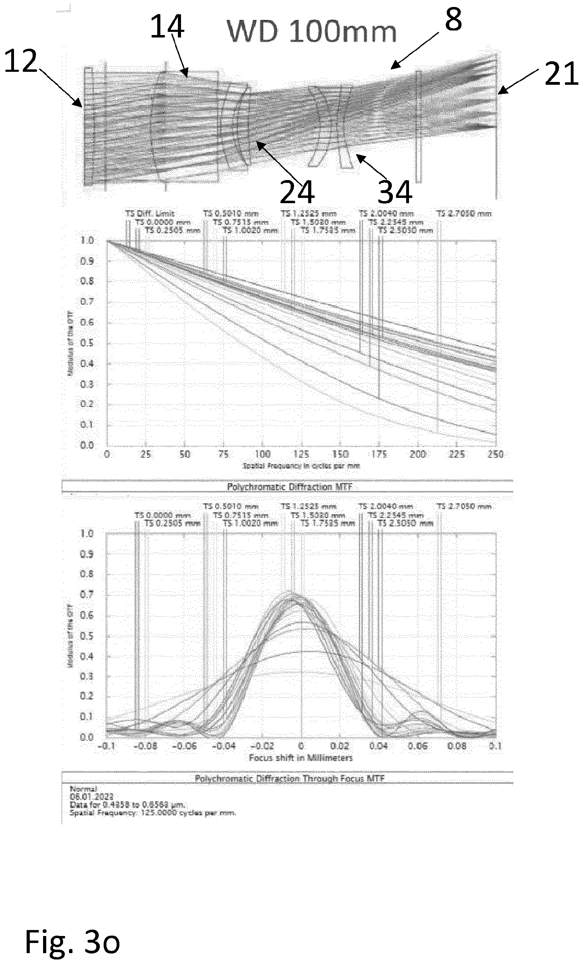

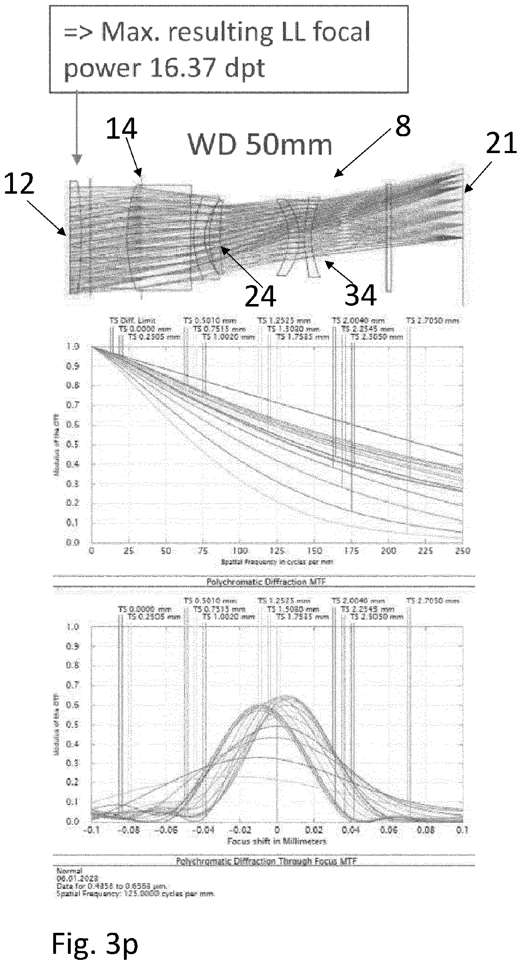

Figure 3a-3d show a plurality of plots indicating the technical effects of an embodiment of an optomechanical assembly 8 according to the present invention. Particularly, Figs. 3a-3d show four different operational states (WD (working distance) infinity, 150 mm, 100 mm and macro 50mm) of the schematically shown optomechanical assembly 8. The latter comprises a shape changing focus adjustable lens 12, which has in the WD inf state zero diopter. The optomechanical assembly 8 furthermore comprises an image sensor 21 and a movable rigid lens 14,

a second movable rigid lens 24 and a third movable rigid lens 34, which are integrated into one barrel, which is configured to move a maximum distance of 2 mm. The shape changing focus adjustable lens 12 has a diopter range of 9.94 diopters. Also shown in Figs. 3a-3d is the quality of the optomechanical assembly 8 with respect to MTF in a polychromatic wavelength range. In the WD range "inf" (cf. Fig. 3a) the MTF value of 125 lines per mm is about 0.4, which only differs in the macro WD (shown in Fig. 3d). The MTF Value is between 0.3 and 0.4 (125 lp/mm). Below the respective MTF plot, the respective Rayleigh performance of the individual system 8 is shown. This demonstrates that in the macro WD 50 mm case (cf. Fig. 3d) the deviation of the wavelengths is compensated and therefore, the field curvature is minimized.

The following table states specific values related to the assemblies 8 of Figures 3a to 3p. The simulated values are so precise that the Figures can be used to read off further values/features from the plots.

| Figures | Maximum movement of the movable rigid lens 14 | Diopter range of the shape changing focus adjustable lens 12 | Function between maximum movement over 1 /WD |
|---|---|---|---|
| 3a-3d | 2.0 mm | 9.94 | 100x |
| 3e-3h | 1.5 mm | 11.71 | 75x |
| 3i-3l | 1.0 mm | 13.88 | 50x |
| 3m-3p | 0.5 mm | 16.37 | 25x |

Such a function can be implemented as a look up table in the OIS part of the optomechanical assembly 8.

## Claims

1. An optomechanical assembly having a field curvature and comprising an image sensor, a shape changing focus adjustable lens and a movable rigid lens, wherein
- the shape changing focus adjustable lens and the movable rigid lens are arranged in series along a light path which extends through the shape changing focus adjustable lens and the movable rigid lens, wherein the movable rigid lens comprises a position with respect to the shape changing focus adjustable lens, wherein
- the shape changing focus adjustable lens and the movable rigid lens are configured to assume at least a first operational state and a different second operational state, wherein an optical power of the shape changing focus adjustable lens differs in the first operational state and in the second operational state, and wherein said position of the moveable rigid lens differs in the first operational state and in the second operational state, so as to achieve a reduced field curvature on the image sensor compared to only changing the shape of the shape changing focus adjustable lens or to only moving the movable rigid lens.

2. A method for macro imaging using an optomechanical assembly according to claim 1, wherein an optical power of the shape changing focus adjustable lens is increased while the movable rigid lens is moved away from the image senor, resulting in a focus distance of less than 10 cm, preferably less than 7cm, more preferably less than 5cm.

3. A method for conducting an optical zoom process using an optomechanical assembly according to claim 1, wherein an optical power of the shape changing focus adjustable lens is decreased while the movable rigid lens is moved away from the image sensor, resulting in an optical zoom ratio of at least 1.5, preferably 2.0, more preferably 2.5.

4. Optomechanical assembly according to claim 1, wherein the shape changing focus adjustable lens is arranged in front of the movable rigid lens with respect to a direction of incoming light traveling along the light path towards the image sensor, wherein the movable rigid lens is arranged in front of the image sensor with respect to said direction.

5. Optomechanical assembly according to claim 1, wherein the movable rigid lens is arranged in front of the shape changing focus adjustable lens with respect to a direction of incoming light traveling along the light path towards the image sensor, wherein the shape changing focus adjustable lens is arranged in the light path in front of the image sensor with respect to said direction.

6. Optomechanical assembly according to one of the claims 1, 4 and 5, comprises furthermore a second movable rigid lens, and particularly a third movable rigid lens.

7. Optomechanical assembly according to one of the claims 1, 4 and 6, comprises furthermore a non-movable rigid lens.

8. Optomechanical assembly according to one of the claims 1, 4 to 7, wherein the movable rigid lens can comprise an optical element or a multitude of optical elements.

9. Optomechanical assembly according to one of the claims 1, 4 to 8, wherein the shape changing focus adjustable lens is designed as an electrowetting lens.

10. Optomechanical assembly according to one of the claims 1, 4 to 8, wherein the shape changing focus adjustable lens is designed as a liquid lens comprising a membrane.

11. Optomechanical assembly according to one of the claims 1, 4 to 8, wherein the shape changing focus adjustable lens is designed as a glass membrane-polymer lens, which comprises a polymer core and on one side of the shape changing focus adjustable lens a glass, which change its shape.

12. Optomechanical assembly according to one of the claims 1, 4 to 8, wherein the shape changing focus adjustable lens is designed as a liquid crystal lens.

13. Optomechanical assembly according to one of the claims 1, 4 to 12, wherein the movable rigid lens is capable of moving a distance of at least 0.3 mm.

14. Optomechanical assembly according to one of the claims 1, 4 to 13, wherein the movable rigid lens is capable of moving a distance of at most 8 mm.

15. Optomechanical assembly according to one of the claims 1, 4 to 14, wherein the shape changing focus adjustable lens is configured to cover an optical power range of at least 3 diopters, preferably at least 5 diopters, more preferably at least 10 diopters.

16. Optomechanical assembly according to one of the claims 1, 4 to 15, comprises furthermore a prism or a mirror, the prism or mirror changing the light path at least by 45 degrees and at most by 135 degrees.

17. Optomechanical assembly according to claim 16, comprises furthermore an actuator, which is configured to tilt the prism, wherein the prism and the shape changing focus adjustable lens are connected such that the tilting of the prism by a certain angle results in a tilting of a surface of the shape changing focus adjustable lens by the same angle.

18. Optomechanical assembly according to one of the claims 1, 4 to 17, wherein the shape changing focus adjustable lens is configured to compensate gravitational effects of the shape changing focus adjustable lens.

19. Optomechanical assembly according to one of the claims 1, 4 to 18, wherein the optomechanical assembly comprises a polychromatic modulation transfer function value of larger than 0.15, preferably larger than 0.3, more preferably larger than 0.4 determined in each case at 125-line pairs per millimeter for visible light over at least 40% of the image sensor diagonal, preferably over at least 60% of the image sensor diagonal, more preferably over at least 80% of the image sensor diagonal, more preferably over at least 100% of the image sensor diagonal.

20. Optomechanical assembly according to one of the claims 1, 4 to 19, wherein the field curvature resulting from imaging a flat object is less than the Rayleigh length of the focused light in the center of the image sensor over at least 40% of the image sensor diagonal, preferably over at least 60% of the image sensor diagonal, more preferably over at least 80% of the image sensor diagonal, more preferably over at least 100% of the image sensor diagonal.

21. Optomechanical assembly according to one of the claims 1, 4 to 20 comprises an image stabilization mechanism for stabilizing an image generated by the image sensor.

22. Optomechanical assembly according to claim 21, furthermore comprises an image sensor actuator configured to move the image sensor perpendicular to the light path.

23. Optomechanical assembly according to one of the claims 21 or 22, wherein the shape changing focus adjustable lens and/or the movable rigid lens are configured to move perpendicular to the light path.

24. Optomechanical assembly according to one of the claims 21 to 23, furthermore comprises a prism, wherein the prism is configured to be tilted so as to achieve image stabilization of an image generated by the image sensor.

25. A method for operating an optomechanical assembly, particularly an optomechanical assembly according to one of the claims 1, 4 to 24, wherein an optical power of a shape changing focus adjustable lens is changed, and wherein a movable rigid lens is moved along a light path with respect to the shape changing focus adjustable lens to reduce a field curvature of the optomechanical assembly compared to only changing the shape of the shape changing focus adjustable lens or compared to only moving the movable rigid lens.
